# FASCICULE DE BREVET EUROPEEN

(11) **EP 3 207 281 B1**
(45) Date de publication et mention de la délivrance du brevet: **24.07.2019**
(21) Numéro de dépôt: 15771196.1
(22) Date de dépôt: 10.09.2015
(51) Int. Cl.: F16F 15/26, F02M 39/02, F04B 17/05, F02M 59/02, F02M 59/10

(54) **DISPOSITIF DE REDUCTION DE ROULIS D'UN GROUPE MOTOPROPULSEUR ET VEHICULE AUTOMOBILE EQUIPE DUDIT DISPOSITIF**
VORRICHTUNG ZUR REDUZIERUNG DER ROLLBEWEGUNG EINES ANTRIEBSSTRANGS UND MIT DIESER VORRICHTUNG AUSGERÜSTETES KRAFTFAHRZEUG
DEVICE FOR REDUCING THE ROLLING MOTION OF A POWER TRAIN AND MOTOR VEHICLE EQUIPPED WITH THIS DEVICE

(30) Priorité: 16.10.2014 FR 1459918
(43) Date de publication de la demande: 23.08.2017
(73) Titulaire: Renault s.a.s., 92100 Boulogne-Billancourt (FR)
(72) Inventeur: DER MATHEOSSIAN, Jean-Yves, 75005 Paris (FR); POLAC, Laurent, 91730 Chamarande (FR)
(86) Numéro de dépôt international: PCT/FR2015/052402
(87) Numéro de publication internationale: WO 2016/059308

(56) Documents cités:
- EP-A1- 2 199 642
- FR-A1- 2 752 604
- FR-A1- 2 782 747
- FR-A1- 2 984 413

## Description

L'invention concerne un dispositif de réduction de roulis dans un groupe motopropulseur. Elle concerne également le véhicule automobile équipé dudit dispositif.

### 1. Domaine de l'invention

La présente invention concerne le domaine de suppression des vibrations des groupes motopropulseurs de véhicule automobile. L'invention vise en particulier les dispositifs antiroulis se basant sur le principe des systèmes contrarotatifs.

### 2. Art antérieur

Les groupes motopropulseurs (GMP) comprenant au moins un moteur à combustion interne sur lequel est agencé un système contrarotatif pour réduire les roulis sont connus du document GB1210245. Toutefois, ce système nécessite plusieurs composants additionnels encombrants pour corriger des problèmes de graillonnement intervenant dans le système contrarotatif.

FR 2 782 747 A1 divulgue un mécanisme d'équilibrage de couple destiné à réduire les vibrations de roulis d'un moteur.

### 3. Objectif de l'invention

L'invention a notamment pour objectif de pallier tout ou partie des inconvénients de l'art antérieur.

Un objectif de l'invention est de fournir un dispositif mécanique permettant de diminuer les vibrations du Groupe Motopropulseur à bas régime consécutives à la variation du couple instantané de roulis d'un moteur à combustion interne, ladite variation de couple produisant des vibrations de roulis du GMP.

### 4. Résumé de l'invention

Ces objectifs sont atteints par l'invention grâce à un dispositif de réduction du roulis du GMP équipé d'un premier arbre entrainant tournant autour d'un premier axe dans une chambre entourée par un carter, le dispositif comprenant une première roue dentée fixée à une extrémité du premier arbre entrainant et engrenant une seconde roue dentée solidaire d'un second arbre tournant autour d'un second axe parallèle au premier axe, la seconde roue dentée étant reliée à un dispositif de rattrapage de jeu apte à plaquer radialement la seconde roue dentée contre la première roue dentée. Le dispositif de rattrapage de jeu est une pompe haute pression.

Ainsi, cette solution permet de résoudre les problèmes précités. En particulier, le dispositif selon l'invention permet de rattraper le jeu et les glissements intervenant entre les dentures de deux roues dentées en contact et montées chacune sur un arbre rotatif disposé dans le carter. Ces glissements sont susceptibles de générer des chocs. Par ailleurs, cette configuration est simple de fabrication et peu coûteuse.

Selon d'autres caractéristiques dont les avantages ressortiront de la présente description :
- le second arbre est solidaire d'une masse d'inertie contrarotative ;
- le dispositif de rattrapage de jeu comprend un moyen élastique ;
- le dispositif de rattrapage de jeu est fixé à la paroi du carter ;
- le dispositif de rattrapage de jeu comprend un bras de liaison apte à coulisser dans une direction orthogonale au second axe; de manière préférentielle, la direction de coulissement est parallèle au plan passant par le premier et second axe.
- le dispositif de rattrapage de jeu comprend un moyen de guidage du coulissement du bras de liaison ;
- la première roue dentée présente une section ovale ;
- le premier arbre entrainant est un arbre de vilebrequin.

L'invention concerne également un groupe motopropulseur comprenant au moins un dispositif de réduction du roulis comprenant les caractéristiques susmentionnées.

### 5. Liste des figures

D'autres caractéristiques et avantages innovants ressortiront de la description ci-après, fournie à titre indicatif et nullement limitatif, en référence aux dessins annexés, dans lesquels :
- La figure 1 représente en vue de côté et légèrement en perspective un exemple de moteur selon l'invention ;
- La figure 2 illustre schématiquement et en coupe une partie du moteur selon un exemple de l'invention ;
- Les figures 3 et 4 sont des représentations schématiques en coupe et de détail du dispositif de réduction du roulis comportant un dispositif de rattrapage de jeu dans deux positions différentes ; et,
- Les figures 5 et 6 sont des vues en perspective d'exemples de vilebrequin que comporte le moteur à combustion.

### 6. Description détaillée

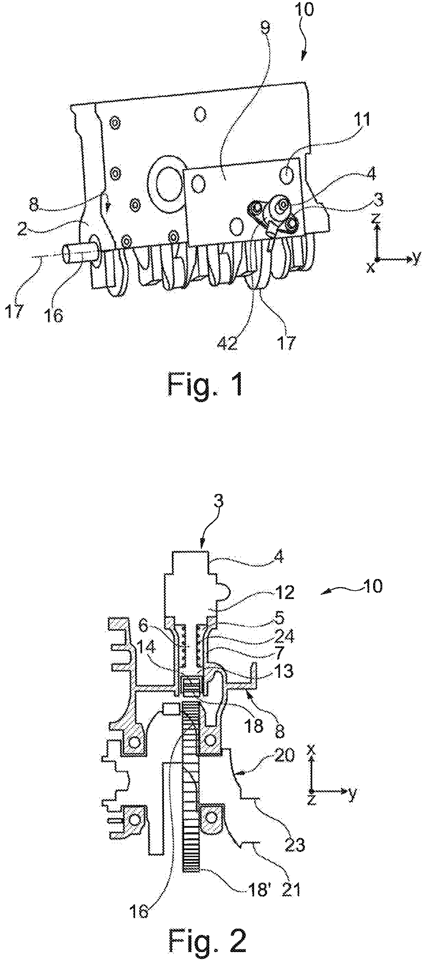

La présente invention se rapporte à un dispositif 1 de réduction du roulis d'un groupe motopropulseur (GMP) d'un véhicule automobile. Le GMP illustré en partie sur les figures 1 et 2 comprend entre autres un moteur 10 à combustion interne monté sur un châssis (non représenté), des moyens permettant sa transmission tels qu'une boîte de vitesse et l'embrayage (non représentés). Le moteur 10 comprend un carter 2 pourvu d'une paroi 8 délimitant une chambre de bielles et formé par une pièce de fonderie réalisée de manière connue par moulage de métal liquide dans un moule ayant la forme du carter recherché. Le moteur 10 est alimenté en carburant via un circuit d'alimentation en carburant aménagé dans le carter 2 et qui reçoit du carburant en provenance d'un réservoir de carburant (non représenté).

Pour faciliter la compréhension de l'invention, nous considérons que le carter 2 du moteur 10 s'étend suivant un axe longitudinal Y, ici horizontal, en référence à la figure 1. Est également représenté l'axe transversal X, également horizontal ici, qui est perpendiculaire à l'axe Z vertical, de sorte que ces trois axes X, Y, Z forment un repère orthogonal direct tel qu'illustré sur les figures 1 et 2.

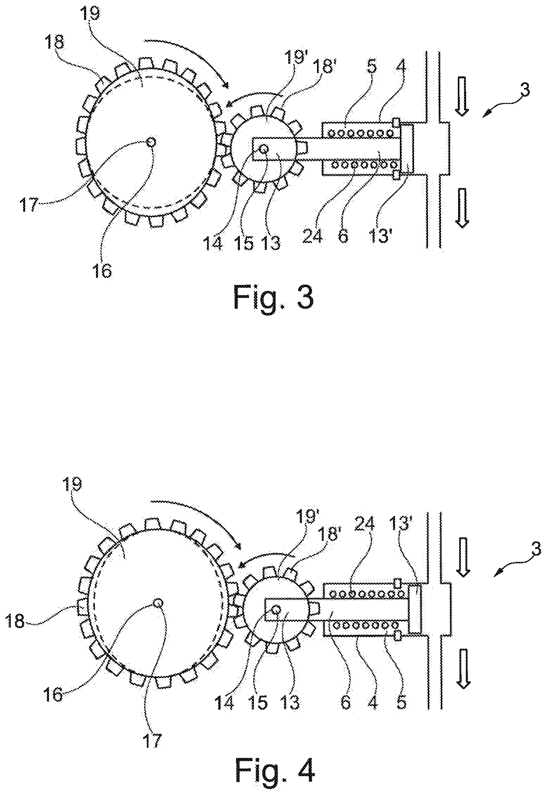

En référence aux figures 3 et 4, un premier arbre 16 entrainant tournant autour d'un premier axe 17 est disposé dans la chambre de bielles entourée par le carter 2. Ce premier arbre 16 est connecté vers une de ses extrémités 27 à un dispositif de réduction du roulis qui comporte une première roue dentée 19 engrenant une seconde roue dentée 19' solidaire d'un second arbre 14 tournant autour d'un second axe 15 qui est parallèle au premier axe 17. Les dentures 18, 18' des deux roues 19, 19' permettent d'engrener le second arbre 14 solidaire d'une masse d'inertie contrarotative (non représentée), ce qui permet de limiter les irrégularités de rotation de l'arbre menant, et de diminuer ainsi les vibrations de roulis communiquées au carter du moteur. Pour créer un effet s'opposant à l'irrégularité de la rotation du premier arbre 16, la seconde roue ou le second arbre sont solidaires d'une masse d'inertie. De manière plus précise, les première et seconde roues dentées 19, 19' tournent respectivement autour des premier et second arbres 16, 14 en sens inverse et de manière synchrone. Cependant, l'existence de jeux entre les deux roues 19, 19' provoque du bruit de choc lorsque la vitesse de rotation n'est pas constante.

L'objet de l'invention est de diminuer les chocs en diminuant lesdits jeux. Selon une caractéristique de l'invention, la seconde roue dentée 19' est reliée à un dispositif de rattrapage 3 de jeu apte à plaquer radialement la seconde roue dentée 19' contre la première roue dentée 19. A cet effet, le second arbre 14 est monté tournant autour du second axe 15 disposé dans le carter 2 et il est connecté à un dispositif de rattrapage 3 de jeu.

Ledit dispositif à rattrapage 3 de jeu est disposé selon une direction transversale à l'axe Y du premier arbre 16. Ledit dispositif à rattrapage 3 de jeu est apte à pousser le deuxième arbre 14 en direction du premier arbre 16 afin de réduire les jeux en fonctionnement. Les chocs de denture seront donc moins importants.

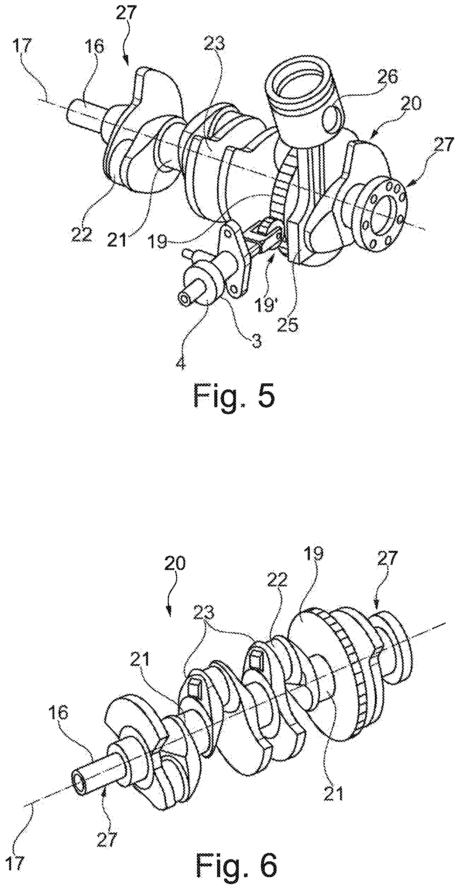

Selon un mode de réalisation de l'invention illustré en particulier sur les figures 5 et 6, le premier arbre 16 sur lequel est montée de manière solidaire la première roue dentée 19 est un arbre de vilebrequin 20 auquel celui-ci est solidaire en rotation. Le vilebrequin 20 comporte entre autres des tourillons 21, des manetons 22 sur lesquels sont montées des bielles 25 raccordées à des pistons 26 coulissant dans des cylindres (non représentés) formées dans le carter 2 et des bras 23 reliant les tourillons 21 aux manetons 22.

Selon une première variante de l'invention illustrée sur la figure 5, la première roue dentée 19 forme un bras du vilebrequin, dans le but de minimiser la masse totale du vilebrequin équipé de la première roue dentée suivant l'invention. Selon une deuxième variante de l'invention illustrée sur la figure 6, la première roue dentée 19 est solidaire d'un tourillon et est distincte des bras de vilebrequin 20. La première roue dentée 19 peut être formée d'une seule pièce avec le vilebrequin 20 ou être une pièce rapportée.

Selon une caractéristique de l'invention, le dispositif de rattrapage 3 de jeu comprend un moyen élastique.

Selon un mode de réalisation, le moyen élastique pousse un piston disposé à une extrémité d'un bras qui tient à l'autre extrémité opposée le deuxième arbre 14, ledit moyen élastique étant solidaire du carter.

Selon l'exemple illustré sur les figures 3 et 4, le dispositif de rattrapage de jeu 3 est une pompe d'alimentation haute pression en carburant qui est destinée à aspirer le carburant du réservoir et l'injecter sous haute pression dans le circuit d'alimentation. La pompe d'alimentation haute pression comprend un corps de pompe 4 comportant une chambre 5 dont l'axe est transversal par rapport à l'axe longitudinal du premier arbre, par exemple il est ici parallèle à l'axe X. Ladite pompe comprend au moins un piston 6 qui est monté mobile en coulissement suivant ledit axe transversal dans la chambre 5 et est fixé à une première extrémité 13 d'un bras qui tient à la deuxième 13' extrémité opposée un deuxième arbre tournant. La deuxième extrémité 13' est disposée à l'intérieur de la chambre 5 et se déplace alternativement à l'intérieur de celle-ci. Le piston forme un bras de liaison coulissant dans une direction orthogonale au second axe 15. Pour optimiser le fonctionnement du dispositif de réduction du roulis, il est préférable d'augmenter la vitesse de rotation du second arbre par rapport à celle du premier arbre. De ce fait, la première roue dentée 19 entrainant présente un diamètre supérieur à celui de la seconde roue dentée 19' menée.

La figure 2 est une coupe non exacte de la figure 1 par rapport au plan XY et regardé dans une direction parallèle à Z. Le corps de pompe 4 est fixé à la paroi 8 du carter 2 du moteur 10 à combustion interne. Ledit corps de pompe peut être guidé au moyen d'un fourreau tubulaire 7 formé d'une seule pièce avec la paroi 8, afin d'éviter un déplacement transversal de la pompe en fonctionnement. Selon un autre mode de réalisation représenté sur la figure 1, le corps de pompe 4 est fixé au carter 2 au moyen d'une platine 9 également fixée sur la paroi 8 du carter 2 via des points de fixation 11. La platine 9 comprend un moyen de réception complémentaire d'une partie 12 du corps de pompe 4. Le piston 6 traverse la chambre 5 et la paroi 8 du carter 2 du moteur 10. Une première extrémité 13 du piston 6 porte le second arbre 14 solidaire de la seconde roue dentée 19 laquelle demeure à l'extérieur de la chambre 5 du corps de pompe 4.

Selon la figure 3, la première roue dentée présente une section ovale adaptée à entraîner le piston 6 de la pompe en coulissement. Ainsi, la première roue dentée 19 entrainant de section ovale permet de pousser la seconde roue dentée 19' menée dans un premier sens orienté vers l'extérieur de la chambre de bielles. La forme ovale permet d'assurer le mouvement de compression/détente de la pompe d'alimentation en carburant. En effet, ladite pompe comporte un moyen élastique apte à pousser le piston 6 dans un sens opposé audit premier sens, ce qui entraine alors le coulissement du piston 6 dans la chambre 5 selon un mouvement de va-et-vient pour permettre l'activation de la pompe haute pression. Ledit moyen élastique est aussi apte à pousser la deuxième roue dentée 19' contre la première roue dentée 19 et permettre le rattrapage de jeu entre les deux dentures 18, 18' des première et seconde roues dentées 19, 19', ce qui réduit les chocs de contact entre lesdites dentures et donc les bruits de fonctionnement. La première roue dentée égrène sur la deuxième roue dentée qui est solidaire d'une masse d'inertie contrarotative (non représentée) pour assurer le fonctionnement du dispositif de réduction du roulis, ladite masse peut être d'une même pièce avec la deuxième roue dentée.

Plus précisément, et comme illustré sur la figure 2, le piston 6 de l'exemple de dispositif de rattrapage de jeu 3 peut être rappelé élastiquement vers la première roue dentée 19 au moyen d'un ressort 24 interposé entre la première 13 et la deuxième extrémité 13' du piston 6.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Dispositif (1) de réduction du roulis d'un groupe motopropulseur comprenant : un premier arbre (16) entrainant tournant autour d'un premier axe (17) dans une chambre entourée par un carter (2), le dispositif (1) comprenant une première roue dentée (19) fixée à une extrémité (27) dudit premier arbre (16) entrainant et engrenant une seconde roue dentée (19') solidaire d'un second arbre tournant autour d'un second axe (15) parallèle au premier axe (16), la seconde roue dentée (19') étant reliée à un dispositif de rattrapage de jeu (3) apte à plaquer radialement la seconde roue dentée (19') contre la première roue dentée (19), **caractérisé en ce que** le dispositif de rattrapage de jeu (13) est une pompe haute pression.

2. Dispositif (1) selon la revendication 1, **caractérisé en ce que** le second arbre (14) est solidaire d'une masse d'inertie contrarotative.

3. Dispositif (1) selon l'une quelconque des revendications 1 ou 2, **caractérisé en ce que** le dispositif de rattrapage de jeu (3) comprend un moyen élastique.

4. Dispositif (1) selon l'une quelconque des revendications 1 à 3, **caractérisé en ce que** le dispositif de rattrapage de jeu (3) est fixé à la paroi (8) du carter (2) .

5. Dispositif (1) selon l'une quelconque des revendications 1 à 4, **caractérisé en ce que** le dispositif de rattrapage de jeu (3) comprend un bras de liaison apte à coulisser dans une direction orthogonale au second axe (15).

6. Dispositif (1) selon la revendication 5, **caractérisé en ce que** le dispositif de rattrapage de jeu (3) comprend un moyen de guidage du coulissement du bras de liaison.

7. Dispositif (1) selon l'une quelconque des revendications 1 à 6, **caractérisé en ce que** la première roue dentée (19) présente une section ovale.

8. Dispositif (1) selon l'une quelconque des revendications 1 à 7, **caractérisé en ce que** l'arbre entraînant (16) est un arbre de vilebrequin (20).

9. Groupe motopropulseur comprenant un dispositif (1) de réduction du roulis selon l'une quelconque des revendications 1 à 8.

## Patentansprüche

1. Vorrichtung (1) zur Reduzierung der Rollbewegung eines Antriebsstrangs, umfassend: eine erste Antriebswelle (16), die sich um eine erste Achse (17) dreht, in einer Kammer, die von einem Gehäuse (2) umgeben ist, die Vorrichtung (1) umfassend ein erstes Zahnrad (19), das an einem Ende (27) der ersten Antriebswelle (16) befestigt ist und in ein zweites Zahnrad (19') eingreift, das mit einer zweiten Welle fest verbunden ist, die sich um eine zweite Achse (15) dreht, die parallel zur ersten Achse (16) verläuft, wobei das zweite Zahnrad (19') mit einer Spielnachstellvorrichtung (3) verbunden ist, die geeignet ist, das zweite Zahnrad (19') radial gegen das erste Zahnrad (19) zu drücken, **dadurch gekennzeichnet, dass** die Spielnachstellvorrichtung (13) eine Hochdruckpumpe ist.

2. Vorrichtung (1) nach Anspruch 1, **dadurch gekennzeichnet, dass** die zweite Welle (14) mit einer gegenläufig drehenden Trägheitsmasse fest verbunden ist.

3. Vorrichtung (1) nach einem der Ansprüche 1 oder 2, **dadurch gekennzeichnet, dass** die Spielnachstellvorrichtung (3) ein elastisches Mittel umfasst.

4. Vorrichtung (1) nach einem der Ansprüche 1 bis 3, **dadurch gekennzeichnet, dass** die Spielnachstellvorrichtung (3) an der Wand (8) des Gehäuses (2) befestigt ist.

5. Vorrichtung (1) nach einem der Ansprüche 1 bis 4, **dadurch gekennzeichnet, dass** die Spielnachstellvorrichtung (3) einen Verbindungsarm umfasst, der geeignet ist, in einer Richtung orthogonal zur zweiten Achse (15) zu gleiten.

6. Vorrichtung (1) nach Anspruch 5, **dadurch gekennzeichnet, dass** die Spielnachstellvorrichtung (3) ein Mittel zur Führung des Gleitens des Verbindungsarms umfasst.

7. Vorrichtung (1) nach einem der Ansprüche 1 bis 6, **dadurch gekennzeichnet, dass** das erste Zahnrad (19) eine ovale Schnittfläche aufweist.

8. Vorrichtung (1) nach einem der Ansprüche 1 bis 7, **dadurch gekennzeichnet, dass** die Antriebswelle (16) eine Kurbelwelle (20) ist.

9. Antriebsstrang, umfassend eine Vorrichtung (1) zur Reduzierung der Rollbewegung nach einem der Ansprüche 1 bis 8.

## Claims

1. Device (1) for reducing the rolling motion of a power train comprising: a first driving shaft (16) rotating about a first axis (17) in a chamber surrounded by a casing (2), the device (1) comprising a first gear wheel (19) attached to one end (27) of said first driving shaft (16) and meshing with a second gear wheel (19') secured to a second shaft rotating about a second axis (15) parallel to the first axis (16), the second gear wheel (19') being connected to a clearance compensating device (3) that is able to radially clamp the second gear wheel (19') against the first gear wheel (19), **characterized in that** the clearance compensating device (13) is a high-pressure pump.

2. Device (1) according to Claim 1, **characterized in that** the second shaft (14) is secured to a counterrotating inertial mass.

3. Device (1) according to either one of Claims 1 and 2, **characterized in that** the clearance compensating device (3) comprises an elastic means.

4. Device (1) according to any one of Claims 1 to 3, **characterized in that** the clearance compensating device (3) is attached to the wall (8) of the casing (2) .

5. Device (1) according to any one of Claims 1 to 4, **characterized in that** the clearance compensating device (3) comprises a connecting arm that is able to slide in a direction orthogonal to the second axis (15) .

6. Device (1) according to Claim 5, **characterized in that** the clearance compensating device (3) comprises a means for guiding the sliding of the connecting arm.

7. Device (1) according to any one of Claims 1 to 6, **characterized in that** the first gear wheel (19) has an oval cross section.

8. Device (1) according to any one of Claims 1 to 7, **characterized in that** the driving shaft (16) is a crankshaft (20).

9. Power train comprising a rolling motion reduction device (1) according to any one of Claims 1 to 8.
